# FASCICULE DE BREVET EUROPEEN

(11) **EP 1 309 629 B1**
(45) Date de publication et mention de la délivrance du brevet: **13.12.2006**
(21) Numéro de dépôt: 01958146.1
(22) Date de dépôt: 20.07.2001
(51) Int. Cl.: C08F 2/38, C08F 293/00, C08F 230/02

(54) **PROCEDE DE SYNTHESE DE POLYMERES A BLOCS PAR POLYMERISATION RADICALAIRE CONTROLEE**
VERFAHREN ZUR HERSTELLUNG VON BLOCKCOPOLYMEREN DURCH KONTROLLIERTE RADIKALISCHE POLYMERISATION
METHOD FOR SYNTHESIS OF BLOCK POLYMERS BY CONTROLLED FREE RADICAL POLYMERISATION

(30) Priorité: 28.07.2000 FR 0009952
(43) Date de publication de la demande: 14.05.2003
(73) Titulaire: RHODIA CHIMIE, 92512 Boulogne Billancourt Cedex (FR)
(72) Inventeur: DESTARAC, Mathias, F-75005 Paris (FR); LEISING, Frédéric, F-60300 Avilly Saint Leonard (FR); GNANOU, Yves, F-33400 Talence (FR); TATON, Daniel, 33750 Camarsac (FR); DUREAULT, Alex, F-75116 PARIS (FR)
(74) Mandataire: Delenne, Marc
(86) Numéro de dépôt international: PCT/FR2001/002374
(87) Numéro de publication internationale: WO 2002/010223

(56) Documents cités:
- WO-A-00/20465
- US-A- 3 639 370
- PATENT ABSTRACTS OF JAPAN vol. 010, no. 103 (C-340), 18 avril 1986 (1986-04-18) & JP 60 233112 A (IDEMITSU SEKIYU KAGAKU KK), 19 novembre 1985 (1985-11-19)
- DATABASE WPI Section Ch, Week 199312 Derwent Publications Ltd., London, GB; Class A41, AN 1993-096776 XP002154822 & JP 05 039296 A (TOKUYAMA SODA KK), 19 février 1993 (1993-02-19)
- DATABASE WPI Section Ch, Week 198710 Derwent Publications Ltd., London, GB; Class A60, AN 1987-069132 XP002154823 & JP 62 022805 A (MITSUBISHI RAYON CO LTD) , 31 janvier 1987 (1987-01-31)

## Description

La présente invention concerne un nouveau procédé de polymérisation radicalaire donnant accès à des polymères à blocs, ainsi que les polymères à blocs ainsi obtenus.

Les polymères à blocs sont habituellement préparés par polymérisation ionique. Ce type de polymérisation présente l'inconvénient de ne permettre la polymérisation que de certains types de monomères apolaires, notamment le styrène et le butadiène, et de requérir un milieu réactionnel particulièrement pur et des températures souvent inférieures à l'ambiante de manière à minimiser les réactions parasites, d'où des contraintes de mise en oeuvre sévères.

La polymérisation radicalaire présente l'avantage d'être mise en oeuvre facilement sans que des conditions de pureté excessives soient respectées et à des températures égales ou supérieures à l'ambiante. Cependant, jusqu'à récemment il n'existait pas de procédé de polymérisation radicalaire permettant d'obtenir des polymères à blocs.

En polymérisation radicalaire conventionnelle, les macroradicaux en croissance ont une réactivité non-sélective : les chaînes se terminent de façon irréversible par couplage ou dismutation. Par conséquent, il est très difficile de contrôler la structure des chaînes. Les possibilités d'obtenir des polymères fonctionnels, téléchéliques ou des copolymères à blocs sont très limitées. Récemment, un nouveau procédé de polymérisation radicalaire s'est développé : il s'agit de la polymérisation radicalaire dite "contrôlée" ou "vivante". Plusieurs techniques ont été mises au point, dans lesquelles les extrémités de chaînes polymères peuvent être réactivées grâce à une réaction de terminaison ou de transfert réversible (équilibre espèce dormante/espèce active).

La polymérisation radicalaire contrôlée présente les aspects distinctifs suivants :
1. le nombre de chaînes est fixe pendant toute la durée de la réaction,
2. les chaînes croissent toutes à la même vitesse, ce qui se traduit par :
   - une augmentation linéaire des masses moléculaires avec la conversion,
   - une distribution des masses resserrée,
3. la masse moléculaire moyenne est contrôlée par le rapport molaire monomère / précurseur de chaîne,
4. la possibilité de préparer des copolymères à blocs.

Le caractère contrôlé est d'autant plus marqué que la vitesse de réactivation des chaînes en radical est très grande devant la vitesse de croissance des chaînes (propagation). Il existe des cas où ce n'est pas toujours vrai (i.e. la vitesse de réactivation des chaînes en radical est inférieure à la vitesse de propagation) et les conditions 1 et 2 ne sont pas observées, néanmoins, il est toujours possible de préparer des copolymères à blocs.

Récemment, des procédés de polymérisation radicalaire vivante par amorçage thermique ont été développés. Par exemple, les demandes de brevet PCT WO 98/01478 au nom de Dupont de Nemours et WO 99/35178 au nom de Rhodia Chimie décrivent l'utilisation d'agents de transfert réversible par addition-fragmentation de type dithioester RSC=SR' pour la synthèse de copolymères à architecture contrôlée. Une autre famille d'agents de transfert réversible, les xanthates RSC=SOR', ont été décrits dans la demande de brevet WO 98/58974 de la société Rhodia Chimie comme précurseurs de copolymères à blocs. Le contrôle de la polymérisation radicalaire par des dithiocarbamates RS(C=S)NR₁R₂ a également été récemment décrit dans les demandes de brevets WO 99/35177 au nom de Rhodia et WO 99/31144 au nom de Dupont de Nemours.

La polymérisation radicalaire contrôlée présente un avantage sur la polymérisation radicalaire conventionnelle lorsqu'il s'agit de préparer des chaînes de bas poids moléculaires et fonctionnalisées (télomères réactifs). De tels polymères sont recherchés pour des applications spécifiques telles que, par exemple, revêtements et adhésifs.

Ainsi, lorsque l'on cherche à synthétiser des chaînes greffées avec en moyenne 2 comonomères fonctionnels, la fraction de chaînes avec au plus un site fonctionnel devient importante quand le degré de polymérisation moyen est inférieur à une valeur seuil (e.g. 20 ou 30). La polymérisation radicalaire contrôlée permet, elle, de réduire, voire inhiber, la formation de ces oligomères à zéro ou un site fonctionnel qui dégradent les performances en application.

Dans la suite de la description, le terme polymère est utilisé pour décrire des homopolymères ou des copolymères sauf indication contraire.

De plus, on entend par polymère à blocs un copolymère comprenant au moins deux enchaînements successifs de blocs d'unités monomères de constitutions chimiques différentes. Les blocs peuvent être constitués d'un homopolymère ou d'un polymère obtenu à partir d'un mélange de monomères éthyléniquement insaturés. Dans ce cas, le bloc peut être un copolymère statistique. Le copolymère à blocs peut comprendre deux blocs constitués, chacun, de copolymères statistiques. Dans ce cas, les monomères éthyléniquement insaturés sont tels que les blocs obtenus sont de natures différentes. Par natures différentes, on entend des blocs constitués de monomères de types différents, mais aussi des blocs constitués de monomères de même type mais dans des quantités différentes.

Un but de la présente invention est de proposer un nouveau procédé de polymérisation radicalaire à l'aide d'un nouvel agent de contrôle.

Un deuxième but de l'invention est de proposer un procédé de polymérisation au cours duquel les masses molaires moyennes en nombre Mₙ des polymères obtenus sont bien contrôlées.

Un autre but est de proposer un procédé de polymérisation radicalaire contrôlée pour la synthèse de polymères fonctionnalisés en bout de chaîne.

Un autre but est de proposer des polymères présentant un indice de polydispersité (M_{w}/Mₙ) faible, c'est-à-dire proche de 1, Mw étant la masse moléculaire en poids.

Tous ces buts et d'autres qui apparaîtront dans la suite de la description sont atteints par la présente invention qui concerne un procédé de préparation d'un polymère fonctionnalisé de première génération qui comprend une étape de polymérisation radicalaire d'une composition comprenant :
- au moins un monomère éthyléniquement insaturé
- une source de radicaux libres, et
- au moins un composé (III) de formule générale (IIIA), (IIIB) ou (IIIC): 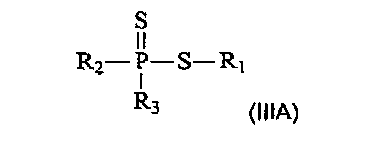 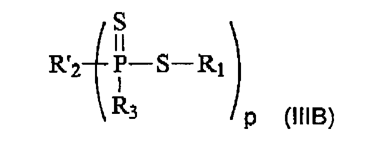 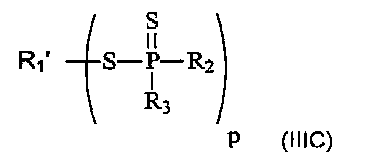 dans lesquelles :
   - R₁ représente :
      - un groupe alkyle, acyle, aryle, aralkyle, éventuellement substitué,
      - un cycle carboné ou un hétérocycle, saturé ou non, aromatique éventuellement substitué,
      - une chaîne polymère,
- R'₁ représente :
   - un cycle carboné ou un hétérocycle, saturé ou non, aromatique éventuellement substitué,
- R₂, R₃, identiques ou différents, représentent :
   - un atome d'hydrogène,
   - -S-R₁,
   - un radical alkyle, acyle, aryle, aralkyle, alcène ou alcyne, éventuellement substitué,
   - un cycle carboné ou un hétérocycle, saturé ou non, aromatique, éventuellement substitué,
- R'₂ représente :
   - un cycle carboné ou un hétérocycle, saturé ou non, aromatique, éventuellement substitué,
   - R₂ et R₃, ou R₂' et R₃, ensembles, représentent les atomes nécessaires pour former un cycle carboné ou un hétérocycle, saturé ou non, aromatique, éventuellement substitué, et
- p est compris entre 2 et 10.

Le composé (III) utile dans le procédé de l'invention comprend une fonction dithiophosphoroester. Le phosphore de par sa pentavalence permet d'augmenter le nombre et par conséquent la nature des substituants.

On peut remarquer que lorsque les radicaux R₂ et/ou R₃ sont -S-R₁, un, deux ou trois sites actifs sont alors présents dans le composé (III). Lorsque R₁ est une chaîne polymère, cette chaîne polymère peut être issue d'une polymérisation radicalaire ou ionique ou issue d'une polycondensation.

Les groupes R₁, R₁', R₂ et R₂' et R₃, lorsqu'ils sont substitués, peuvent être substitués par des groupes phényles substitués, des groupes aromatiques substitués, des cycles carbonés saturés ou non, des hétérocycles saturé ou non, ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, perfluoroalkyle CₙF₂ₙ₊₁, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.
Selon un mode de réalisation particulier, R₁ sont des groupes alkyles substitués ou non, de préférence substitués.

Les composés (III) utiles dans la présente invention sont par exemple les composés III dans lesquels R₁ est choisi parmi :
- CH₂C₆H₅
- CH(CH₃)(CO₂Et)
- CH(CH₃)(C₆H₅)
- CH(CO₂Et)₂
- C(CH₃)(CO₂Et)(S-C₆H₅)
- C(CH₃)₂(C₆H5)
- C(CH₃)₂CN 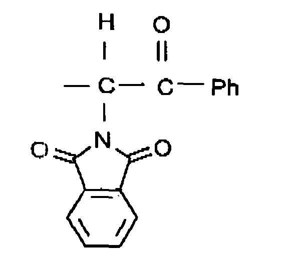 dans lesquelles Et représente un groupe éthyle et Ph représente un groupe phényle. Les composés de formules (IIIA), (IIIB) et (IIIC) sont facilement accessibles. Ils peuvent notamment être obtenus par réaction entre P₄S₁₀, K₂CO₃ et un dérivé halogéné (Nizamov et al. *Phosphorous Sulfur and Silicon,* vol. 132, 85-100 (1998).Une autre voie d'accès consiste à faire réagir un sel de métal alcalin d'un acide dithiophosphonique avec un dérivé halogéné (Mastryukova et al, *Bull. Acad. Sci. USSR. Div. Chem. Sci (Engl Transl),* Vol. 27, 1917 (1978)).
   Le procédé de l'invention est dans tous les cas mis en oeuvre en présence d'une source de radicaux libres, cependant, pour certains monomères, tels que le styrène, les radicaux libres permettant d'initier la polymérisation peuvent être générer par le monomère à insaturation éthylénique, lui-même à des températures suffisamment élevées généralement supérieure à 100°C. Il n'est pas, dans ce cas, nécessaire d'ajouter une source de radicaux libres supplémentaires.
   La source de radicaux libres utile dans le procédé de la présente invention est généralement un initiateur de polymérisation radicalaire. L'initiateur de polymérisation radicalaire peut être choisi parmi les initiateurs classiquement utilisés en polymérisation radicalaire. Il peut s'agir par exemple d'un des initiateurs suivants :

- les peroxydes d'hydrogène tels que : l'hydroperoxyde de butyle tertiaire, l'hydroperoxyde de cumène, le t-butyl-peroxyacétate, le t-butylperoxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :
   - les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
   - les persulfates, perborate ou perchlorate de métaux alcalins ou d'ammonium en association avec un bisulfite de métal alcalin, tel que le métabisulfite de sodium, et des sucres réducteurs,
   - les persulfate de métal alcalin en association avec un acide arylphosphinique, tel que l'acide benzène phosphonique et autres similaires, et des sucres réducteurs.

Selon un mode de réalisation, la quantité d'initiateur à utiliser est déterminée de manière à ce que la quantité de radicaux générés soit d'au plus 50 % en mole par rapport à la quantité de composé (III), de préférence d'au plus 20 % en mole.

Les monomères éthyléniquement insaturés utiles dans le procédé de la présente invention sont tous les monomères qui polymérisent en présence du composé (III), pour donner des chaînes polymères actives.

Ces monomères éthyléniquement insaturés sont par exemple
- le styrène et les dérivés du styrène comme l'alphaméthylstyrène ou le vinyltoluène
- les esters vinyliques d'acide carboxylique comme l'acétate de vinyle, le Versatate^{®} de vinyle, le propionate de vinyle,
- les halogénures de vinyle,
- les acides mono- et di- carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leurs dérivés N-substitués,
- les amides des acides carboxyliques insaturés comme l'acrylamide, le méthacrylamide, le N-méthylolacrylamide ou méthacrylamide, les N-alkylacrylamides.
- les monomères éthyléniques comportant un groupe acide sulfonique et ses sels alcalins ou d'ammonium par exemple l'acide vinylsulfonique, l'acide vinyl-benzène sulfonique, l'acide alpha-acrylamido méthylpropane-sulfonique, le 2-sulfoéthylène-méthacrylate,
- les amides de la vinylamine, notamment le vinylformamide ou le vinylacétamide,
- les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate ou -méthacrylate, le ditertiobutylaminoéthyl-acrylate ou -méthacrylate, le diméthylamino méthyl-acrylamide ou - méthacrylamide, ou des monomères zwitterioniques comme par exemple l'acrylate de sulfopropyl (diméthyl)aminopropyle,
- les diènes par exemple le butadiène, le chloroprène,
- les esters (méth)acryliques,
- les nitriles vinyliques.
- L'acide vinylphosphoniques et ses dérivés.

Par esters (méth)acryliques, on désigne les esters de l'acide acrylique et de l'acide méthacrylique avec les alcools en C₁-C₁₂ hydrogénés ou fluorés, de préférence C₁-C₈. Parmi les composés de ce type, on peut citer : l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle.

Les nitriles vinyliques incluent plus particulièrement ceux ayant de 3 à 12 atomes de carbone, comme en particulier l'acrylonitrile et le méthacrylonitrile.

Pour la préparation de bloc polyvinylamines, on utilise de préférence à titre de monomères éthyléniquement insaturés les amides de la vinylamine, par exemple le vinylformamide ou le vinylacétamide. Puis, le polymère obtenu est hydrolysé à pH acide ou basique.

Pour la préparation de bloc polyalcoolvinyliques, on utilise de préférence à titre de monomères éthyléniquement insaturés les esters vinyliques d'acide carboxylique, comme par exemple l'acétate de vinyle. Puis, le polymère obtenu est hydrolysé à pH acide ou basique.

Les types et quantités de monomères polymérisables mis en oeuvre selon la présente invention varient en fonction de l'application finale particulière à laquelle est destiné le polymère. Ces variations sont bien connues et peuvent être facilement déterminées par l'homme du métier.

Ces monomères éthyléniquement insaturés peuvent être utilisés seuls ou en mélanges.

Selon un mode de réalisation particulier, dans le procédé de préparation d'un polymère de première génération, le monomère éthyléniquement insaturé correspond à la formule CXX' (= CV - CV')_{b} = CH₂ et, lorsqu'on utilise un composé (III) de formule (IIIA), le polymère de première génération obtenu correspond à la formule 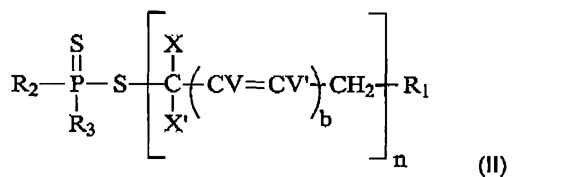 dans lesquelles
- R₁ représentent :
   - un groupe alkyle, acyle, aryle, éventuellement substitué,
   - un cycle carboné ou un hétérocycle, saturé ou non, aromatique éventuellement substitué,
   - une chaîne polymère
- R₂ et R₃, identiques ou différents, représentent :
   - un atome d'hydrogène,
   - -S-R₁ ou -S-[CXX'-(CV=CV')_{b}-CH₂]ₙ-R₁
   - un radical alkyle, acyle, aryle, aralkyle, alcène ou alcyne, éventuellement substitué,
   - un cycle carboné ou un hétérocycle, saturé ou non, aromatique, éventuellement substitué,
   - R₂ et R₃, ensembles, représentent les atomes nécessaires pour former un cycle carboné ou un hétérocycle, saturé ou non, aromatique, éventuellement substitué,
- n est supérieur ou égal à 1, de préférence supérieur à 6,
- V, V', identiques ou différents, représentent : H, un groupe alkyle ou un halogène,
- X, X', identiques ou différents, représentent H, un halogène ou un groupe R₄, OR₄, O₂COR₄, NHCOH, OH, NH₂, NHR₄, N(R₄)₂, (R₄)₂N⁺O⁻, NHCOR₄, CO₂H, CO₂R₄, CN, CONH₂, CONHR₄ ou CON(R₄)₂, dans lesquels R₄ est choisi parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique, et
- b est 0 ou 1.

Le procédé ci-dessus est décrit à partir d'un composé de formule (IIIA) cependant cet enseignement est directement applicable aux composés de formules (IIIB) ou (IIIC).

La polymérisation peut être réalisée en masse, en solution; en émulsion, en dispersion ou en suspension. De préférence, elle est mise en oeuvre en solution ou en émulsion.

De préférence, le procédé est mis en oeuvre de manière semi-continue.

La température peut varier entre la température ambiante et 150°C selon la nature des monomères utilisés.

En général, au cours de la polymérisation, la teneur instantanée en polymère par rapport à la quantité instantanée en monomère et polymère est comprise entre 50 et 99 % en poids, de préférence entre 75 et 99 %, encore plus préférentiellement entre 90 et 99 %. Cette teneur est maintenue, de manière connue, par contrôle de la température, de la vitesse d'addition des réactifs et éventuellement de l'initiateur de polymérisation.

Généralement, le procédé est mis en oeuvre en l'absence de source UV, par amorçage thermique.

On peut mettre en oeuvre le procédé de l'invention à partir d'un mélange de monomères éthyléniquement insaturés. On obtient dans ce cas un polymère de première génération statistique. En sélectionnant des monomères de natures particulières, par exemple des monomères hydrophiles et des monomères hydrophobes et la quantité de chacun de ces monomères dans le bloc, on obtient un bloc ayant des propriétés particulières. Ce mode opératoire est particulièrement intéressant lorsque le polymère de première génération ainsi obtenu est un intermédiaire dans la préparation d'un copolymère à blocs.

La présente invention concerne aussi un procédé de préparation d'un copolymère à blocs de Nième génération, par polymérisation radicalaire, N étant supérieur ou égal à 2, qui comprend :
- une première étape de polymérisation radicalaire telle que décrite précédemment pour former le polymère de première génération, suivi de
- N-1 étapes de polymérisation radicalaire, chacune de ces étapes étant mise en oeuvre à partir d'une composition comprenant :
   - au moins un monomère éthyléniquement insaturé
   - une source de radicaux libres, et
   le polymère à blocs obtenu à l'étape de polymérisation radicalaire précédente, le ou les monomères éthyléniquement insaturés étant tels que le bloc formé à cette étape est de nature différente du bloc formé à l'étape précédente.

Par exemple, on peut obtenir un copolymère à blocs de deuxième génération par un procédé qui comprend la polymérisation radicalaire d'une composition comprenant :
- au moins un monomère éthyléniquement insaturé,
- une source de radicaux libres, et
- le polymère de première génération obtenu par polymérisation radicalaire de la composition contenant le composé (III) et des monomère éthyléniquement insaturé, le bloc ainsi obtenu étant de nature différente du polymère de première génération.

Selon un mode de réalisation de l'invention, (1) on synthétise un polymère de première génération à partir d'une composition comprenant un ou plusieurs monomères éthyléniquement insaturés, d'une source de radicaux libres et d'un composé de formule (IIIA), (IIIB) ou (IIIC), et ensuite (2) on utilise le polymère de première génération obtenu à l'étape (1) pour préparer un copolymère diblocs ( de deuxième génération) par mise en contact de ce polymère de première génération avec un ou plusieurs monomères éthyléniquement insaturés et une source de radicaux libres, le bloc obtenu à l'étape (2) étant de nature différente du polymère de première génération de l'étape (1).

Cette étape (2) peut être répétée avec de nouveaux monomères et le copolymères dibloc obtenu pour synthétiser un nouveau bloc et obtenir un copolymère tribloc.

On peut ainsi répéter autant de fois que nécessaire l'étape de polymérisation à partir d'un copolymère à blocs pour obtenir un copolymère avec un bloc supplémentaire.

Le procédé de l'invention permet ainsi d'obtenir un copolymère dibloc de formule générale (I) : 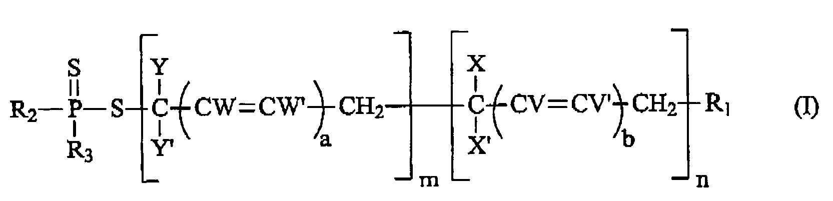 à partir d'une composition comprenant :
- un monomère éthyléniquement insaturé de formule CYY'(CW=CW')ₐ= CH₂,
- un polymère de première génération de formule générale (II) : 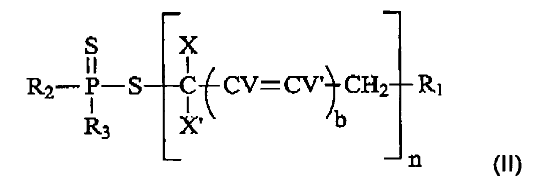 dans lesquelles :
- R₁ représentent :
   - un groupe alkyle, acyle, aryle, éventuellement substitué,
   - un cycle carboné ou un hétérocycle, saturé ou non, aromatique éventuellement substitué,
   - une chaîne polymère,
- R₂ et R₃, identiques ou différents, représentent :
   - un atome d'hydrogène,
   - -S-R₁ ou -S-[CXX'-(CV=CV')_{b}-CH₂]ₙ-R₁,
   - un radical alkyle, acyle, aryle, aralkyle, alcène ou alcyne, éventuellement substitué,
   - un cycle carboné ou un hétérocycle, saturé ou non, aromatique, éventuellement substitué,
   - R₂ et R₃, ensembles, représentent les atomes nécessaires pour former un cycle carboné ou un hétérocycle, saturé ou non, aromatique, éventuellement substitué.
- n et m identiques ou différents, sont supérieurs ou égaux à 1,
- V, V', W et W', identiques ou différents, représentent : H, un groupe alkyle ou un halogène,
- X, X', Y et Y', identiques ou différents, représentent H, un halogène ou un groupe R₄, OR₄, O₂COR₄, NHCOH, OH, NH₂, NHR₄, N(R₄)₂, (R₄)₂N⁺O-, NHCOR₄, CO₂H, CO₂R₄, CN, CONH₂, CONHR₄ ou CON(R₄)₂, dans lesquels R₄ est choisi parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique, et
- a et b, identiques ou différents, valent 0 ou 1.

Les monomères éthyléniquement insaturés qui sont utiles sont ceux décrits précédemment.

Le procédé ci-dessus est décrit à partir d'un polymère (II) obtenu à partir d'un composé de formule (IIIA) cependant cet enseignement est directement applicable aux polymères obtenus à partir des composés (IIIB) et (IIIC).

Les composés de formule (IIIA) lorsque R₂ et/ou R₃ représentent -S-R₁, (IIIB) et (IIIC) sont particulièrement intéressants car ils permettent de faire croître une chaîne polymère sur au moins deux sites actifs. Avec ce type de composés, il est possible d'économiser des étapes de polymérisation pour obtenir un copolymère à n blocs. Ainsi, si p vaut 2 dans la formule (IIIB) ou (IIIC), le premier bloc est obtenu par polymérisation d'un monomère M1 en présence du composé de formule (IIIB) ou (IIIC). Ce premier bloc peut ensuite croître à chacune de ses extrémités par polymérisation d'un deuxième monomère M2. Un copolymère tribloc est obtenu, ce copolymère tribloc peut, lui-même, croître à chacune de ses extrémités par polymérisation d'un troisième monomère M3. Ainsi, un copolymère "pentabloc" est obtenu en seulement trois étapes. Si p est supérieur à 2, le procédé permet d'obtenir des homopolymères ou des copolymères à blocs dont la structure est "multi-bras" ou en étoile.

Selon ce procédé de préparation de polymères à blocs, lorsque l'on souhaite obtenir des polymères à blocs homogènes et non à gradient de composition, et si toutes les polymérisations successives sont réalisées dans le même réacteur, il est essentiel que tous les monomères utilisés lors d'une étape aient été consommés avant que la polymérisation de l'étape suivante ne commence, donc avant que les nouveaux monomères ne soient introduits.

Lorsque l'on veut obtenir un bloc statistique, l'étape de polymérisation est mise en oeuvre avec une composition contenant un mélange de monomères éthyléniquement insaturés.

La présente invention concerne aussi les polymères de première génération et les polymères à blocs susceptibles d'être obtenus selon l'un quelconque des procédés de l'invention. Ces polymères présentent un indice de polydispersité faible et une masse moléculaire controlée. L'indice de polydispersité est d'au plus 2, de préférence d'au plus 1,5.

Selon un mode de réalisation particulier, les polymères à blocs comprennent au moins deux blocs polymères choisis parmi les associations suivantes :
- polystyrène/polyacrylate de méthyle
- polystyrène/polyacrylate d'éthyle,
- polystyrène/polyacrylate de tertiobutyle,
- polyacrylate d'éthyle/polyacétate de vinyle,
- polyacrylate de butyle/polyacétate de vinyle
- polyacrylate d'éthyle/polyacrylate de tertiobutyle,
- polyacrylate de tertiobutyle/polyacétate de vinyle,
- polyacrylate d'éthyle/polyacrylate de butyle,
- polyacrylate de butyle/alcool polyvinylique,
- polyacide acrylique/alcool polyvinylique.

Un des blocs peut aussi être constitué d'un copolymère statistique obtenu à partir d'un mélange de monomères éthyléniquement insaturés.

Selon un mode de réalisation particulier, les extrémités réactives du polymère à blocs peuvent être clivées pour former un polymère dont les extrémités sont des thiols ou des atome d'hydrogène. Ces modifications peuvent être mises en oeuvre par réduction et/ou hydrolyse.

Les exemples suivants illustrent l'invention sans toutefois en limiter la portée.

### EXEMPLES:

### Exemple 1

### SYNTHESE DES COMPOSES PRECURSEURS DE FORMULE (IIIA) : synthèse d'un tétrathiophosphate de formule (IIIA1)

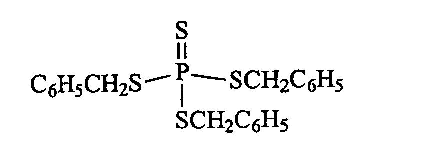

1 eq.de décasulfure tétraphosphoré (P4S10) est d'abord traité avec 6 eq. de carbonate de potassium dans l'acétonitrile, pendant 30 min. à 100°C. Après refroidissement jusqu'à la température ambiante, on ajoute 12 eq. de chlorure de benzyle et le mélange est porté au reflux pendant 2 heures. Après filtration des sous-produits de la réaction et lavage du filtrat, le produit est purifié par chromatographie sur gel d'alumine neutre (éluant : toluène). Le rendement est de 15%. RMN ¹³C (CDCl₃) : 128-130 ppm :groupement phényle ; 44 ppm :CH₂Ph.

### Exemple 2

### SYNTHESE DES HOMOPOLYMERES DE FORMULE (I)

Dans les exemples donnés ci-dessous, les réactions de polymérisation sont effectuées dans des appareillages de type Schlenk. Dans chaque cas, le mélange contenu dans le réacteur est connecté à une rampe à vide, plongé dans l'azote liquide, puis trois cycles de congélation-vide-retour à température ambiante afin de dégazer le mélange. Le réacteur est ensuite laissé sous vide statique à la température appropriée. Le suivi cinétique est réalisé en effectuant des prélèvements du milieu réactionnel au cours du temps, sous courant d'azote. Après chaque prélèvement, on procède à une nouvelle opération de dégazage comme décrite ci-dessus. La conversion du monomère est déterminée par gravimétrie après évaporation sous vide du monomère résiduel.
Les (co)polymères sont analysés par chromatographie d'exclusion stérique (SEC) en utilisant le THF comme solvant d'élution ; les masses molaires sont exprimées en équivalents polystyrène (g.mol⁻¹).
Ces exemples démontrent que la polymérisation radicalaire est contrôlée en faisant appel au composé de formule (IIIA1). Le contrôle de la polymérisation est notamment mis en évidence à travers les valeurs des indices de polymlécularité, Iₚ = M_{w}/Mₙ, inférieurs à 1,5. Par ailleurs, les valeurs expérimentales des masses molaires moyennes en nombre (Mₙ) et des masses au pic (Mₚ) croissent linéairement avec la conversion en monomère.

### Exemple 2.1. : homopolystyrène obtenu à partir du composé (IIIA1)

On mélange 0,183 g (4,24x10⁻⁴ mole) de composé de formule générale (IIIA1) et 4,54 g (4,37x10⁻² mole) de styrène. Après dégazage, la solution est portée à 110°C. L'évolution de la masse molaire observée au sommet du pic Mₚ du chromatogramme SEC est reportée dans le tableau suivant. On observe aussi que, sur toute la gamme de conversion, l'indice de polydispersité est inférieur à 1,4.

| **Conversion (%)** | **Mₚ (g/mol)** |
|---|---|
| 10 | 4150 |
| 16 | 6700 |
| 35 | 24200 |
| 45 | 29400 |
| 51 | 34050 |
| 61 | 43900 |

### Exemple 2.2. : Copolymère di blocs POLY(STYRENE-b-ACRYLATE DE METHYLE) à partir d'un homostyrène

On prépare une solution à partir de :
- 3 g d'acrylate de méthyle,
- 1 g de précurseur homopolystyrène de masse molaire égale à Mₚ = 40000 g.mol⁻¹ (Iₚ= 1,3) préparé selon le protocole de l'exemple 2.1, et
- 7 mg d'AIBN (azobis-isobutyronitrile).
Cette solution est portée à 60°C après les opérations de dégazage. La polymérisation dure 45 minutes, temps au bout duquel on évapore le monomère résiduel. Les résultats sont les suivants :
Masse molaire moyenne en nombre, Mₚ = 64000 g.mol⁻¹.
Indice de polymolécularité Iₚ = 1,3.

Cet exemple montre que l'homostyrène de l'exemple 2.1 présente des extrémités actives puisqu'on observe une augmentation des valeurs de Mn par addition d'acrylate de méthyle et le maintien d'un faible indice de polydispersité.

## Revendications

1. Procédé de préparation d'un polymère de première génération qui comprend une étape de polymérisation radicalaire d'une composition comprenant :
- au moins un monomère éthyléniquement insaturé,
- une source de radicaux libres, et
- au moins un composé (III) de formule générale (IIIA), (IIIB) ou (IIIC) : 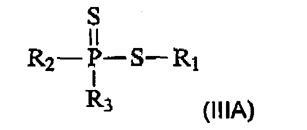 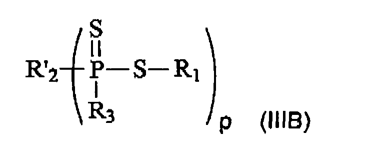 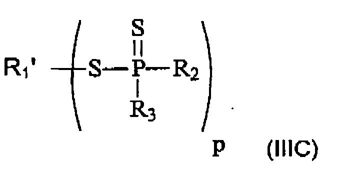
dans lesquelles :
- R₁ représente :
. un groupe alkyle, acyle, aryle, aralkyle, éventuellement substitué,
. un cycle carboné ou un hétérocycle, saturé ou non, aromatique éventuellement substitué,
. une chaîne polymère,
- R'₁ représente :
. un cycle carboné ou un hétérocycle, saturé ou non, aromatique éventuellement substitué,
- R₂, et R₃, identiques ou différents, représentent :
. un atome d'hydrogène,
. -S-R₁,
. un radical alkyle, acyle, aryle, aralkyle, alcène ou alcyne, éventuellement substitué,
. un cycle carboné ou un hétérocycle, saturé ou non, aromatique, éventuellement substitué,
- R'₂ représente :
. un cycle carboné ou un hétérocycle, saturé ou non, aromatique, éventuellement substitué,
. R₂ et R₃, ou R₂' et R₃, ensembles, représentent les atomes nécessaires pour former un cycle carboné ou un hétérocycle, saturé ou non, aromatique, éventuellement substitué, et
- p est compris entre 2 et 10.

2. Procédé selon la revendication 1 dans lequel le monomère éthyléniquement insaturé correspond à la formule CXX' (= CV - CV')_{b} = CH₂, et le polymère à blocs de première génération obtenu correspond à la formule 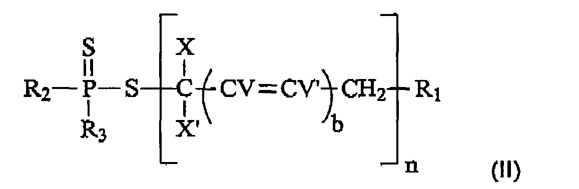 dans lesquelles
- R₁ représentent :
un groupe alkyle, acyle, aryle, aralkyle, éventuellement substitué,
un cycle carboné ou un hétérocycle, saturé ou non, aromatique éventuellement substitué,
. une chaîne polymère,
- R₂ et R₃, identiques ou différents, représentent :
. un atome d'hydrogène,
. -S-R₁ ou-S-[CXX'-(CV=CV')_{b}-CH₂]ₙ-R₁,
. un radical alkyle, acyle, aryle, aralkyle, alcène ou alcyne, éventuellement substitué,
. un cycle carboné ou un hétérocycle, saturé ou non, aromatique, éventuellement substitué,
. R₂ et R₃, ensembles, représentent les atomes nécessaires pour former un cycle carboné ou un hétérocycle, saturé ou non, aromatique, éventuellement substitué,
- n est supérieur ou égal à 1, de préférence supérieur à 6,
- V, V', identiques ou différents, représentent : un atome d'hydrogène, un groupe alkyle ou un halogène,
- X, X', identiques ou différents, représentent H, un halogène ou un groupe R₄, OR₄, O₂COR₄, NHCOH, OH, NH₂, NHR₄, N(R₄)₂, (R₄)₂N⁺O⁻, NHCOR₄, CO₂H, CO₂R₃, CN, CONH₂, CONHR₄ ou CON(R₄)₂, dans lesquels R₄ est choisi parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique,
- b est 0 ou 1.

3. Procédé de préparation d'un copolymère à blocs de Nième génération par polymérisation radicalaire, N étant supérieur ou égal à 2, qui comprend :
- une première étape de polymérisation radicalaire pour former un polymère de première génération à partir d'une composition comprenant :
- au moins un monomère éthyléniquement insaturé
- une source de radicaux libres, et
- au moins un composé (III) de formule générale (IIIA), (IIIB) ou (IIIC) : 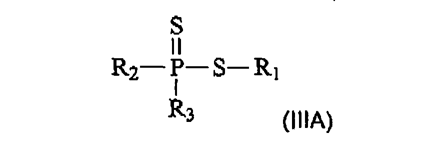 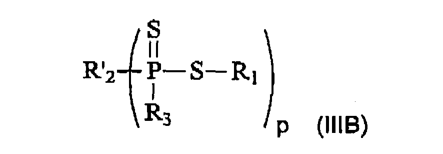 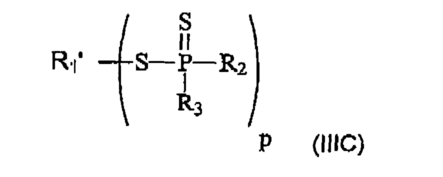
dans lesquelles :
- R₁ représente :
. un groupe alkyle, acyle, aryle, aralkyle, éventuellement substitué,
. un cycle carboné ou un hétérocycle, saturé ou non, aromatique éventuellement substitué,
. une chaîne polymère,
- R'₁ représente :
. un cycle carboné ou un hétérocycle, saturé ou non, aromatique éventuellement substitué,
- R₂, R₃, identiques ou différents, représentent :
. un atome d'hydrogène,
. -S-R₁,
. un radical alkyle, acyle, aryle, aralkyle, alcène ou alcyne, éventuellement substitué,
. un cycle carbone ou un hétérocycle, saturé ou non, aromatique, éventuellement substitué,
- R'₂ représente :
· un cycle carboné ou un hétérocycle, saturé ou non, aromatique, éventuellement substitué,
· R₂ et R₃, ou R₂' et R₃, ensembles, représentent les atomes nécessaires pour
former un cycle carboné ou un hétérocycle, saturé ou non, aromatique, éventuellement substitué,
- p est compris entre 2 et 10, suivi de
- un nombre N-1 étapes de polymérisation radicalaire, chacune de ces étapes étant mise en oeuvre à partir d'une composition comprenant :
- au moins un monomère éthyléniquement insaturé,
- une source de radicaux libres, et
- le polymère à blocs obtenu à l'étape de polymérisation précédente, le ou les monomères éthyléniquement insaturés étant tels que le bloc formé à cette étape est de nature différente du bloc formé à l'étape précédente.

4. Procédé selon la revendication 3 de préparation d'un copolymère à blocs de deuxième génération qui comprend la polymérisation radicalaire d'une composition comprenant :
- au moins un monomère éthyléniquement insaturé,
- une source de radicaux libres, et
- le polymère de première génération défini dans les revendications 1 ou 2.

5. Procédé selon la revendication 4 pour la préparation d'un polymère à blocs de formule générale (I) : 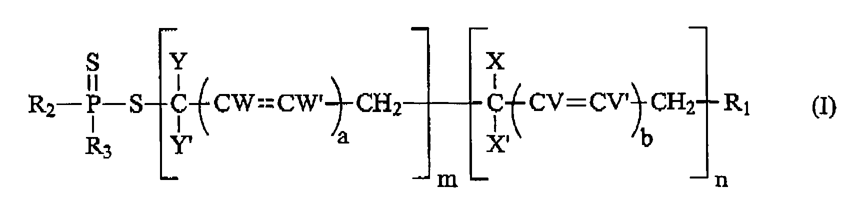 à partir d'une composition comprenant :
- un monomère éthyléniquement insaturé de formule CYY'(CW=CW')₃=CH₂,
- un polymère de première génération de formule générale (II) : 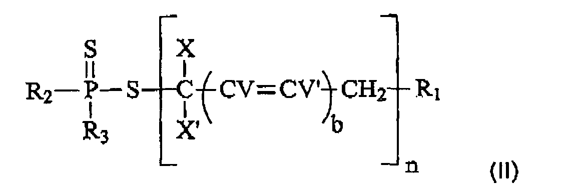
dans lesquelles :
- R₁ représentent :
. un groupe alkyle, acyle, aryle, aralkyle, éventuellement substitué,
. un cycle carboné ou un hétérocycle, saturé ou non, aromatique éventuellement substitué,
. une chaîne polymère,
- R₂ et R₃, identiques ou différents, représentent :
. un atome d'hydrogène,
. -S-R₁ ou -S-[CXX'-(CV=CV')_{b}-CH₂]ₙ-R₁,
. un radical alkyle, acyle, aryle, aralkyle, alcène ou alcyne, éventuellement substitué,
. un cycle carboné ou un hétérocycle, saturé ou non, aromatique, éventuellement substitué,
. R₂ et R₃, ensembles, représentent les atomes nécessaires pour former un cycle carboné ou un hétérocycle, saturé ou non, aromatique, éventuellement substitué,
- n et m identiques ou différents, sont supérieurs ou égaux à 1,
- V, V', W et W', identiques ou différents, représentent : H, un groupe alkyle ou un halogène,
- X, X', Y et Y', identiques ou différents, représentent H, un halogène ou un groupe R₄, OR₄, O₂COR₄, NHCOH, OH, NH₂, NHR₄, N(R₄)₂, (R₄)₂N⁺O-, NHCOR₄, CO₂H, CO₂R₄, CN, CONH₂, CONHR₄ ou CON(R₄)₂, dans lesquels R₄ est choisi parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique, et
- a et b, identiques ou différents, valent 0 ou 1.

6. Procédé selon l'une quelconque des revendications précédentes dans lequel le monomère éthyléniquement insaturé est choisi parmi le styrène ou ses dérivés, les diènes, les esters (méth)acryliques, les nitriles vinyliques, les esters vinyliques.

7. Polymère susceptible d'être obtenu par un procédé tel que défini selon l'une quelconque des revendications 1 à 6.

8. Polymère selon la revendication 7 **caractérisé en ce qu'**il présente un indice de polydispersité d'au plus 2.

9. Polymère selon la revendication 7 ou 8 présente au moins deux blocs polymères.

10. Polymère à blocs selon la revendication 9 dans lequel les deux blocs sont choisis parmi les associations suivantes :
- polystyrène/polyacrylate de méthyle
- polystyrène/polyacrylate d'éthyle,
- polystyrènelpolyacrylate de tertiobutyle,
- polyacrylate d'éthyle/polyacétate de vinyle,
- polyacrylate de butyle/polyacétate de vinyle
- polyacrylate d'éthyle/polyacrylate de tertiobutyle,
- polyacrylate de tertiobutyle/polyacétate de vinyle,
- polyacrylate d'éthyle/polyacrylate de butyle,
- polyacrylate de butyle/alcool polyvinylique,
- polyacide acrylique/alcool polyvinylique.

11. Polymère selon l'une quelconque des revendications 7 à 10 dans lequel au moins un des blocs est constitué d'un polymère statistique obtenu à partir d'un mélanges de monomères éthyléniquememt insaturés.

## Claims

1. Process for preparing a first generation polymer, which comprises a step of free radical polymerization of a composition comprising:
- at least one ethylenically unsaturated monomer,
- a source of free radicals, and
- at least one compound (III) of general formula (IIIA), (IIIB) or (IIIC): 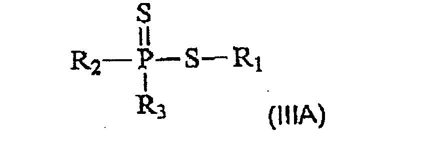 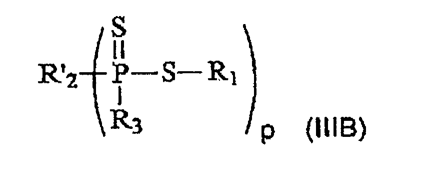 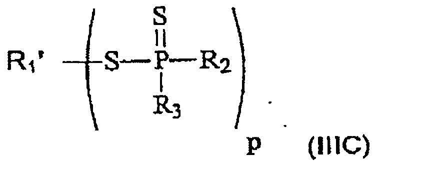
in which:
- R₁ represents:
. an optionally substituted alkyl, acyl, aryl or aralkyl group,
. an optionally substituted, aromatic, saturated or unsaturated heterocyclic or carbon ring,
. a polymeric chain,
- R'₁ represents:
. an optionally substituted, aromatic, saturated or unsaturated heterocyclic or carbon ring,
- R₂ and R₃, which are identical or different, represent:
. a hydrogen atom,
. -S-R₁,
. an optionally substituted alkyl, acyl, aryl, aralkyl, alkene or alkyne radical,
. an optionally substituted, aromatic, saturated or unsaturated heterocyclic or carbon ring,
- R'₂ represents:
. an optionally substituted, aromatic, saturated or unsaturated
. heterocyclic or carbon ring,
. R₂ and R₃, or R'₂ and R₃, together, represent the atoms needed to form an optionally substituted,aromatic, saturated or unsaturated heterocyclic or carbon ring, and
- p is between 2 and 10.

2. Process according to Claim 1, in which the ethylenically unsaturated monomer corresponds to the formula CXX' (= CV - CV')_{b} = CH₂ and the first generation block polymer obtained corresponds to the formula 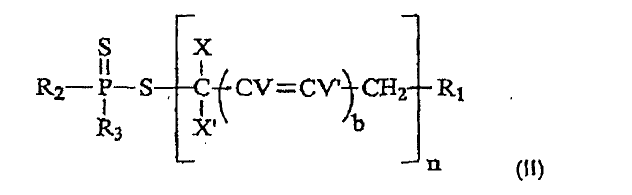 in which
- R₁ represents:
. an optionally substituted alkyl, acyl, aryl or aralkyl group,
. an optionally substituted, aromatic, saturated or unsaturated heterocyclic or carbon ring,
. a polymeric chain,
- R₂ and R₃, which are identical or different, represent:
. a hydrogen atom,
. -S-R₁ or -S- [CXX'-(CV=CV')_{b}-CH₂] ₙ-R₁,
. an optionally substituted alkyl, acyl, aryl, aralkyl, alkene or alkyne radical,
. an optionally substituted, aromatic, saturated or unsaturated heterocyclic or carbon ring,
. R₂ and R₃, together, represent the atoms needed to form an optionally substituted, aromatic, saturated or unsaturated heterocyclic or carbon ring,
- n is greater than or equal to 1, preferably greater than 6,
- V and V', which are identical or different, represent: a hydrogen atom, an alkyl group or a halogen,
- X and X', which are identical or different, represent H, a halogen or a group R₄, OR₄, O₂COR₄, NHCOH, OH, NH₂, NHR₄, N(R₄)₂, (R₄)₂N⁺O⁻, NHCOR₄, CO₂H , CO₂R₃, CN, CONH₂, CONHR₄ or CON(R₄)₂, in which R₄ is selected from alkyl, aryl, aralkyl, alkaryl, alkene or organosilyl groups which are optionally perfluorinated and optionally substituted by one or more carboxy, epoxy, hydroxyl, alkoxy, amino, halogen or sulfonic groups,
- b is 0 or 1.

3. Process for preparing an Nth generation block copolymer by free radical polymerization, N being greater than or equal to 2, which comprises:
- a first step of free radical polymerization to form a first generation polymer starting from a composition comprising:
- at least one ethylenically unsaturated monomer,
- a source of free radicals, and
- at least one compound (III) of general formula (IIIA), (IIIB) or (IIIC): 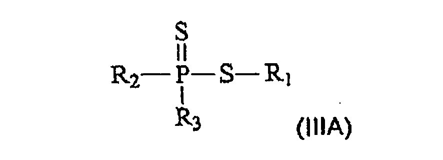 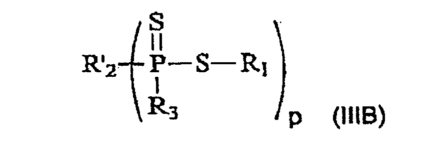 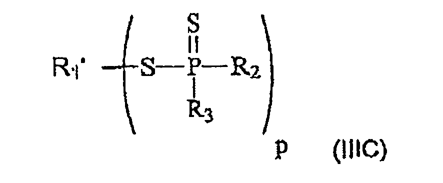
in which:
- R₁ represents:
. an optionally substituted alkyl, acyl, aryl or aralkyl group,
. an optionally substituted, aromatic, saturated or unsaturated heterocyclic or carbon ring,
. a polymeric chain,
- R'₁ represents:
. an optionally substituted, aromatic, saturated or unsaturated heterocyclic or carbon ring,
- R₂ and R₃, which are identical or different, represent:
. a hydrogen atom,
. -S-R₁,
. an optionally substituted alkyl, acyl, aryl, aralkyl, alkene or alkyne radical,
. an optionally substituted, aromatic, saturated or unsaturated heterocyclic or carbon ring,
- R'₂ represents:
. an optionally substituted, aromatic, saturated or unsaturated heterocyclic or carbon ring,
. R₂ and R₃, or R'₂ and R₃, together, represent the atoms needed to form an optionally substituted, aromatic, saturated or unsaturated heterocyclic or carbon ring,
- p is between 2 and 10, followed by
- N-1 steps of free radical polymerization, each of these steps being implemented starting from a composition comprising:
- at least one ethylenically unsaturated monomer,
- a source of free radicals, and
- the block polymer obtained in the preceding step of polymerization, the ethylenically unsaturated monomer or monomers being such that the block formed in this step is different in nature to the block formed in the preceding step.

4. Process according to Claim 3 for preparing a second generation block copolymer, which comprises the free radical polymerization of a composition comprising:
- at least one ethylenically unsaturated monomer,
- a source of free radicals, and
- the first generation polymer defined in Claims 1 or 2.

5. Process according to Claim 4 for preparing a block polymer of general formula (I): 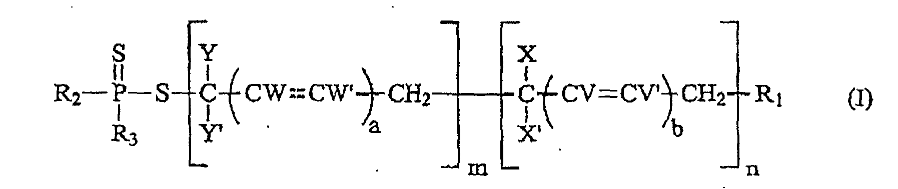 starting from a composition comprising:
- an ethylenically unsaturated monomer of formula CYY' (CW=CW')ₐ=CH₂,
- a first generation polymer of general formula (II) : 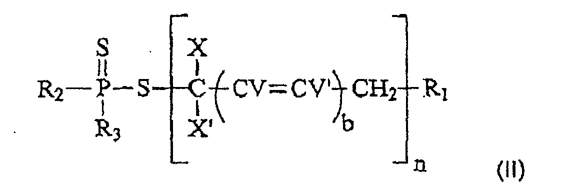
in which:
- R₁ represents:
. an optionally substituted alkyl, acyl, aryl or aralkyl group,
. an optionally substituted, aromatic, saturated or unsaturated heterocyclic or carbon ring,
. a polymeric chain,
- R₂ and R₃, which are identical or different, represent:
. a hydrogen atom,
. -S-R₁ or -S-[CXX'-(CV=CV')_{b}-CH₂]ₙ-R₁,
. an optionally substituted alkyl, acyl, aryl, aralkyl, alkene or alkyne radical,
. an optionally substituted, aromatic, saturated or unsaturated heterocyclic or carbon ring,
. R₂ and R₃, together, represent the atoms needed to form an optionally substituted, aromatic, saturated or unsaturated heterocyclic or carbon ring,
- n and m, which are identical or different, are greater than or equal to 1,
- V, V', W and W', which are identical or different, represent: H, an alkyl group or a halogen,
- X, X', Y and Y', which are identical or different, represent H, a halogen or a group R₄, OR₄, O₂COR₄, NHCOH, OH, NH₂, NHR₄, N(R₄)₂, (R₄)₂N⁺O⁻, NHCOR₄, CO₂H, CO₂R₄, CN, CONH₂, CONHR₄ or CON(R₄)₂, in which R₄ is selected from alkyl, aryl, aralkyl, alkaryl, alkene or organosilyl groups which are optionally perfluorinated and optionally substituted by one or more carboxy, epoxy, hydroxyl, alkoxy, amino, halogen or sulfonic groups, and
- a and b, which are identical or different, are 0 or 1.

6. Process according to any one of the preceding claims, in which the ethylenically unsaturated monomer is selected from styrene or its derivatives, dienes, (meth)acrylic esters, vinyl nitriles and vinyl esters.

7. Polymer obtainable by a process as defined in any one of Claims 1 to 6.

8. Polymer according to Claim 7 **characterized in that** it has a polydispersity index of not more than 2.

9. Polymer according to Claim 7 or 8 **characterized in that** it has at least two polymeric blocks.

10. Block polymer according to Claim 9, in which the two blocks are selected from the following combinations:
- polystyrene/polymethyl acrylate,
- polystyrene/polyethyl acrylate,
- polystyrene/poly-tert-butyl acrylate,
- polyethyl acrylate/polyvinyl acetate,
- polybutyl-acrylate/polyvinyl acetate,
- polyethyl acrylate/poly-tert-butyl acrylate
- poly-tert-butyl acrylate/polyvinyl acetate,
- polyethyl acrylate/polybutyl acrylate,
- polybutyl acrylate/polyvinyl alcohol,
- polyacrylic acid/polyvinyl alcohol.

11. Polymer according to any of one of Claims 7 to 10, in which at least one of the blocks is composed of a random polymer obtained starting from a mixture of ethylenically unsaturated monomers.

## Patentansprüche

1. Herstellungsverfahren eines Polymers der ersten Generation, umfassend eine Stufe der radikalischen Polymerisation einer Zusammensetzung, die umfasst:
- mindestens ein ethylenisch ungesättigtes Monomer,
- eine Quelle freier Radikale, und
- mindestens eine Verbindung (III) der allgemeinen Formel (IIIA), (IIIB) oder (IIIC): 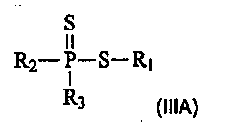 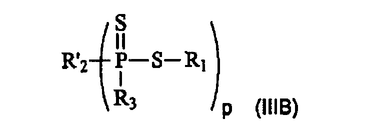 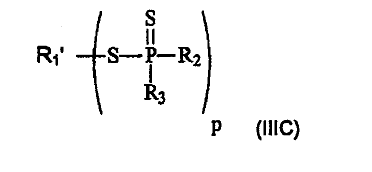
worin:
- R₁ darstellt:
• eine Alkyl-, Acyl-, Aryl-, Aralkylgruppe, möglicherweise substituiert,
• einen Kohlenstoffring oder einen Heterozyklus, gesättigt oder nicht, aromatisch möglicherweise substituiert,
• eine Polymerkette,
- R'₁ darstellt:
• einen Kohlenstoffring oder einen Heterozyklus, gesättigt oder nicht, aromatisch möglicherweise substituiert,
- R₂ und R₃, identisch oder verschieden, darstellen:
• ein Wasserstoffatom,
• -S-R₁,
• ein Alkyl-, Acyl-, Aryl-, Aralkyl-, Alken- oder Alkinradikal, möglicherweise substituiert,
• einen Kohlenstoffring oder einen Heterozyklus, gesättigt oder nicht, aromatisch, möglicherweise substituiert,
- R'₂ darstellt:
• einen Kohlenstoffzyklus oder einen Heterozyklus, gesättigt oder nicht, aromatisch, möglicherweise substituiert,
• R₂ und R₃ oder R₂' und R₃ zusammen die notwendigen Atome darstellen, um einen Kohlenstoffring oder einen Heterozyklus, gesättigt oder nicht, aromatisch, möglicherweise substituiert, zu bilden, und
- p zwischen 2 und 10 liegt.

2. Verfahren gemäß Anspruch 1, wobei das ethylenisch ungesättigte Monomer der Formel CXX'(=CV-CV')_{b}=CH₂ entspricht und das erhaltene Blockpolymer der ersten Generation der Formel entspricht 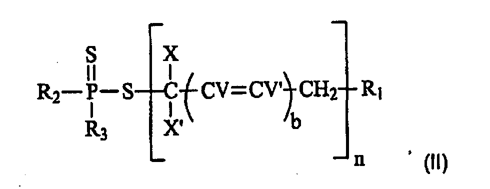 worin
- R₁ darstellt:
• eine Alkyl-, Acyl-, Aryl-, Aralkylgruppe, möglicherweise substituiert,
• einen Kohlenstoffring oder einen Heterozyklus, gesättigt oder nicht, aromatisch möglicherweise substituiert,
• eine Polymerkette,
- R₂ und R₃, identisch oder verschieden, darstellen:
• ein Wasserstoffatom,
• -S-R₁ oder -S-[CXX'-(CV=CV')_{b}-CH₂]ₙ-R₁,
• ein Alkyl-, Acyl-, Aryl-, Aralkyl-, Alken- oder Alkinradikal, möglicherweise substituiert,
• einen Kohlenstoffring oder einen Heterozyklus, gesättigt oder nicht, aromatisch, möglicherweise substituiert,
• R₂ und R₃ zusammen die notwendigen Atome darstellen, um einen Kohlenstoffring oder einen Heterozyklus, gesättigt oder nicht, aromatisch, möglicherweise substituiert, zu bilden,
- n größer oder gleich 1 ist, vorzugsweise größer 6,
- V, V', identisch oder verschieden, darstellen: ein Wasserstoffatom, eine Alkylgruppe oder ein Halogen,
- X, X', identisch oder verschieden, darstellen H, ein Halogen oder eine Gruppe R₄, OR₄, O₂COR₄, NHCOH, OH, NH₂, NHR₄, N(R₄)₂, (R₄)₂N⁺O⁻, NHCOR₄, CO₂H, CO₂R₃, CN, CONH₂, CONHR₄ oder CON(R₄)₂, worin R₄ ausgewählt ist aus Alkyl-, Aryl-, Aralkyl-, Alkaryl-, Alken- oder Organosilylgruppen, möglicherweise perfluoriert und möglicherweise substituiert mit einer oder mehreren Carboxyl-, Epoxy-, Hydroxyl-, Alkoxy-, Amino-, Halogen- oder Sulfongruppen,
- b 0 oder 1 ist.

3. Herstellungsverfahren eines Blockcopolymers der N-ten Generation durch radikalische Polymerisation, wobei N größer oder gleich 2 ist, das umfasst:
- eine erste Stufe der radikalischen Polymerisation, um ein Polymer der ersten Generation zu bilden ausgehend von einer Zusammensetzung, die umfasst:
- mindestens ein ethylenisch ungesättigtes Monomer,
- eine Quelle freier Radikale, und
- mindestens eine Verbindung (III) der allgemeinen Formel (IIIA), (IIIB) oder (IIIC): 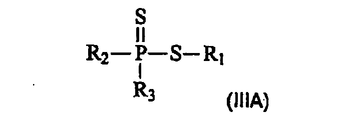 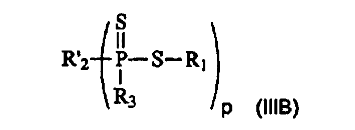 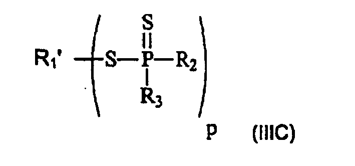
worin:
- R₁ darstellt:
• eine Alkyl-, Acyl-, Aryl-, Aralkylgruppe, möglicherweise substituiert,
• einen Kohlenstoffring oder einen Heterozyklus, gesättigt oder nicht, aromatisch möglicherweise substituiert,
• eine Polymerkette,
- R'₁ darstellt:
• einen Kohlenstoffring oder einen Heterozyklus, gesättigt oder nicht, aromatisch möglicherweise substituiert,
- R₂, R₃, identisch oder verschieden, darstellen:
• ein Wasserstoffatom,
• -S-R₁,
• ein Alkyl-, Acyl-, Aryl-, Aralkyl-, Alken- oder Alkinradikal, möglicherweise substituiert,
• einen Kohlenstoffring oder einen Heterozyklus, gesättigt oder nicht, aromatisch, möglicherweise substituiert,
- R'₂ darstellt:
• einen Kohlenstoffring oder einen Heterozyklus, gesättigt oder nicht, aromatisch, möglicherweise substituiert,
• R₂ und R₃ oder R₂' und R₃ zusammen die notwendigen Atome darstellen, um einen Kohlenstoffring oder einen Heterozyklus, gesättigt oder nicht, aromatisch, möglicherweise substituiert, zu bilden,
- p zwischen 2 und 10 liegt, gefolgt von
- einer Anzahl von N-1 Stufen der radikalischen Polymerisation, wobei jede dieser Stufen durchgeführt wird ausgehend von einer Zusammensetzung, die umfasst:
- mindestens ein ethylenisch ungesättigtes Monomer,
- eine Quelle freier Radikale, und
- das Blockpolymer, das bei der vorhergehenden Polymerisationsstufe erhalten wurde, wobei das oder die ethylenisch ungesättigten Monomere so sind, dass der bei dieser Stufe gebildete Block verschieden ist von dem bei der vorhergehenden Stufe gebildeten Block.

4. Verfahren gemäß Anspruch 3 zur Herstellung eines Blockcopolymers der zweiten Generation, umfassend die radikalische Polymerisation einer Zusammensetzung, die umfasst:
- mindestens ein ethylenisch ungesättigtes Monomer,
- eine Quelle freier Radikale, und
- das Polymer der ersten Generation, das in den Ansprüchen 1 oder 2 definiert ist.

5. Verfahren gemäß Anspruch 4 zur Herstellung eines Blockpolymers der allgemeinen Formel (I): 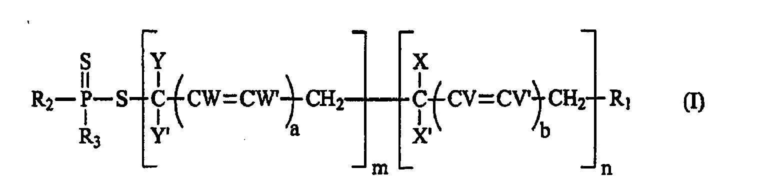 ausgehend von einer Zusammensetzung, die umfasst:
- ein ethylenisch ungesättigtes Monomer der Formel CYY'(CW=CW')ₐ=CH₂,
- ein Polymer der ersten Generation der allgemeinen Formel (II): 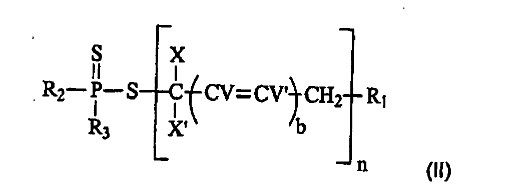
worin:
- R₁ darstellt:
• eine Alkyl-, Acyl-, Aryl-, Aralkylgruppe, möglicherweise substituiert,
• einen Kohlenstoffring oder einen Heterozyklus, gesättigt oder nicht, aromatisch möglicherweise substituiert,
• eine Polymerkette,
- R₂ und R₃, identisch oder verschieden, darstellen:
• ein Wasserstoffatom,
• -S-R₁ oder -S-[CXX'-(CV=CV)'_{b}-CH₂]ₙ-R₁,
• ein Alkyl-, Acyl-, Aryl-, Aralkyl-, Alken- oder Alkinradikal, möglicherweise substituiert,
• einen Kohlenstoffring oder einen Heterozyklus, gesättigt oder nicht, aromatisch, eventuell substituiert,
• R₂ und R₃ zusammen die notwendigen Atome darstellen, um einen Kohlenstoffring oder einen Heterozyklus, gesättigt oder nicht, aromatisch, möglicherweise substituiert, zu bilden,
- n und m, identisch oder verschieden, größer oder gleich 1 sind,
- V, V', W und W', identisch oder verschieden, darstellen: H, eine Alkylgruppe oder ein Halogen,
- X, X', Y und Y', identisch oder verschieden, darstellen H, ein Halogen oder eine Gruppe R₄, OR₄, O₂COR₄, NHCOH, OH, NH₂, NHR₄, N(R₄)₂, (R₄)₂N⁺O⁻, NHCOR₄, CO₂H, CO₂R₄, CN, CONH₂, CONHR₄ oder CON(R₄)₂, worin R₄ ausgewählt ist aus Alkyl-, Aryl-, Aralkyl-, Alkaryl-, Alken- oder Organosilylgruppen, möglicherweise perfluoriert und möglicherweise substituiert mit einer oder mehreren Carboxyl-, Epoxy-, Hydroxyl-, Alkoxy-, Amino-, Halogen- oder Sulfongruppen, und
- a und b, identisch oder verschieden, den Wert 0 oder 1 haben.

6. Verfahren gemäß einem der vorhergehenden Ansprüche, wobei das ethylenisch ungesättigte Monomer ausgewählt ist aus Styrol oder seinen Derivaten, Dienen, (Meth)acrylestern, Vinylnitrilen, Vinylestern.

7. Polymer, das durch ein Verfahren erhalten werden kann, wie es gemäß einem der Ansprüche 1 bis 6 definiert ist.

8. Polymer gemäß Anspruch 7, **dadurch gekennzeichnet, dass** es einen Polydispersitätsindex von höchstens 2 aufweist.

9. Polymer gemäß Anspruch 7 oder 8, das mindestens zwei Blockpolymere aufweist.

10. Blockpolymer gemäß Anspruch 9, wobei die zwei Blöcke ausgewählt sind aus folgenden Verbunden:
- Polystyrol/Polymethylacrylat,
- Polystyrol/Polyethylacrylat,
- Polystyrol/Poly-tert-butylacrylat,
- Polyethylacrylat/Polyvinylacetat,
- Polybutylacrylat/Polyvinylacetat,
- Polyethylacrylat/Poly-tert-butylacrylat,
- Poly-tert-butylacrylat/Polyvinylacetat,
- Polyethylacrylat/Polybutylacrylat,
- Polybutylacrylat/Polyvinylalkohol,
- Polyacrylsäure/Polyvinylalkohol.

11. Polymer gemäß einem der Ansprüche 7 bis 10, wobei mindestens einer der Blöcke aus einem statistischen Polymer besteht, das ausgehend von einer Mischung ethylenisch ungesättigter Monomere erhalten wurde.
